# EUROPEAN PATENT APPLICATION

(11) **EP 2 659 947 A1**
(43) Date of publication of application: **06.11.2013**
(21) Application number: 12196205.4
(22) Date of filing: 09.12.2012
(51) Int. Cl.: B01D 53/56, B01D 53/78

(54) **Method and apparatus for removing contaminants from exhaust gases**

(30) Priority: 30.04.2012 US 201261640128 P
(71) Applicant: Linde Aktiengesellschaft, 80331 München (DE)
(72) Inventor: Suchak, Naresh J., Glen Rock, NJ New Jersey 07452 (US)
(74) Representative: Hofmann, Andreas

(57) **Abstract**

In order to overcome the problems that earlier methods and apparatus have experienced, a method and an apparatus (10; 20) for removing contaminants from a gas stream by feeding the gas stream (1) into the apparatus (10; 20) that can use seawater as the scrubbing medium (3) are proposed. The gas stream is first scrubbed with the scrubbing medium and then mixed with ozone (2) to remove the contaminants. Nitrogen oxides that are present in the gas stream are converted to nitric acid/nitrates, and these may be recovered via condensate or coalesced mist for neutralization. The treated gas stream (4) is then exhausted to the atmosphere.

## Description

### Technical field of the present invention

The present invention relates to the technical field of removing contaminants from a gas stream.

### Background of the present invention; prior art

Combustion and chemical processes generally result in gas streams containing contaminants that need to be cleaned up before the gas stream is exhausted to the atmosphere.

Large ocean freighters, ferries, ocean liners and navy vessels use low cost hydrocarbon fuels that contain sulphur, chlorine, nitrogen and metal compounds in hydrocarbons which results in exhaust gases with contaminants such as acid gases, particulate matter and heavy metals. As per new legislative mandates, these large emitters need to clean up the flue gas stream before exhausting it to the atmosphere.

Amongst many technologies and devices, aqueous scrubbing using seawater is one of the more widely used techniques to remove acid gases such as sulfur oxides, chlorine, hydrochloric acid, etc., particulates and other contaminants. Seawater is mildly alkaline and generally used in once through mode to neutralize the acidic components present in the seawater to form salts that are permitted to be discharged back to the ocean in an environmentally safe manner.

Many industrial installations using wet scrubbers such as fluid catalytic cracker regenerators and electrical generation along the sea coast use seawater for scrubbing in a once through or recycle mode.

In combustion processes, in addition to sulfur oxides, hydrochloric acid, chlorine and other acid gases, nitrogen oxides are also formed due to a number of reasons such as high flame temperature (thermal NO_{X}), nitrogenous compounds present in the fuel (fuel NO_{X}) or nitrogenous content of material subjected to combustion temperatures such as incineration of waste.

Nitrogen oxides formed at temperatures above 1300°F are mainly in the form of nitric oxide, NO. Nitric oxide is the major component of nitrogen oxides in combustion processes. Nitric oxide is almost insoluble so aqueous scrubbing removes negligible amounts from nitrogen oxide streams. Coal, solid fuels, heavy oils and other carbon feed stocks when combusted result in exhaust gas streams that contain particulate matter and other objectionable contaminants such as heavy metals like mercury which may or may not be effectively scrubbed by aqueous scrubbing.

Amongst all absorption processes, ozone-based processes as described in US 5 206 002, in US 6 162 409, and in US 7 303 735 B2 provide multi-pollutant removal approaches and have been implemented on flue gas arising from gas and coal fired boilers for removal of multiple pollutants including nitrogen oxides, sulfur oxides, particulates, etc. Ozone-based processes are also industrially practiced in lowering emissions in metal pickling processes, fluidized catalytic cracker (FCC) regenerator, and metal recovery furnaces.

The method as disclosed in US 5 206 002, in US 6 162 409, in US 6 649 132 B1, and in US 7 303 735 B2 uses the chemistry of nitrogen oxide reaction with ozone to form higher oxides of nitrogen, especially the pentavalent form or higher. These oxides are very soluble in water and are easily removed by wet scrubbing. The stoichiometric amount of ozone required to convert one mole of nitrogen oxides in the form of NO to the pentavalent form is about 1.5 moles of ozone. This number is reduced to 0.5 moles of ozone if the nitrogen oxides are in the form of NO₂.

Although the methods described in these patents are effective at achieving low levels of nitrogen oxides emissions in the treated gas stream, they generate nitrate/nitric acid in the scrubber purge. The nitrate/nitric acid needs to be disposed of in an environmentally safe way or must be utilized in making a useful by-product. This all adds to the expense of treating for the nitrogen oxides.

When seawater is used as a scrubbing medium, due to its limited alkalinity, is used in a once through mode. This generates a large quantity of liquid discharge from the wet scrubber. When ozone is added for nitrogen oxides removal, the purge stream will contain nitrates which will require treatment before discharge back to the sea.

### Disclosure of the present invention: object, solution, advantages

Starting from the disadvantages and shortcomings as described above and taking the prior art as discussed into account, an object of the present invention is to overcome the problems that earlier methods and apparatus have experienced.

This object is accomplished by a method comprising the features of claim 1 as well as by an apparatus comprising the features of claim 14. Advantageous embodiments and expedient improvements of the present invention are disclosed in the respective dependent claims.

By the present invention, an improved method for removing nitrogen oxides and other contaminants from a gaseous stream arising from combustion and chemical processes is disclosed. The present invention oxidizes nitrogen oxides with the addition of ozone downstream of a wet scrubbing stage thereby separating nitrogen oxides removal products such as nitric acid and/or nitrates from the scrubbing of other contaminants present in the gas stream being treated.

The scrubbing is preferably performed with seawater such as those industrial installations on sea coasts and aboard ships in a once through mode in the scrubber and where nitrate discharge is to be avoided.

According to a preferred embodiment of the present invention, the scrubbing medium is fed
- into at least one cooling coil or mist eliminator or mist elimination device or
- into at least one wet electro static precipitator
and is joined with the gas stream as the gas stream enters the scrubber.

The present invention is not limited to purely seawater scrubbing but could be employed in conjunction with any industrial wet scrubber meant for particulate and/or acid gas scrubbing. In this context, the scrubbing medium may comprise at least one aqueous medium.

In order to contact the gas stream with the scrubbing medium, in particular with the scrubbing agent, the scrubbing medium may be directed or redirected through at least one distributor, in particular through at least one spray nozzle, so that said gas stream contacts said scrubbing medium and is quenched by this contact.

In an advantageous embodiment of the present invention, the scrubbing medium, which may be used in a once through manner or which may be recycled, can be captured at the bottom of the scrubber and can be withdrawn by means of at least one pump and/or can be purged from the scrubber.

Expediently, the gas stream rises through the scrubber so as to contact the ozone, which may have sufficient space based on the size of the scrubber to react with, in particular to make oxidize, nitrogen oxides and/or sulfur oxides present in the gas stream.

In a favoured embodiment of the present invention, the scrubber may be attached to at least one ozone adding device, in particular to at least one droplet separator or to at least one droplet separation device. The ozone may be injected at the top of the scrubber, in particular at the top of the ozone adding device.

Preferably, moisture and/or oxidized nitrogen oxides/nitric acid can be adsorbed by means of at least one dry adsorbent, being for example in a fluidized form or in at least one fixed bed.

Before recovering said gas stream free of said contaminants, the nitric acid/nitrate condensate or coalesced mist may be collected from said gas stream.

The present invention provides not only for a method for removing contaminants selected from the group consisting of nitrogen oxides, sulfur oxides, particulates, heavy metals and acid gases from gas streams but also for a scrubbing apparatus being operable according to said method. In particular, said apparatus may be attached to at least one ozone adding device, in particular to at least one droplet separator or to at least one droplet separation device.

More particularly, the present invention provides for the removal of contaminants from gas streams arising from engines and other combustion devices on board ships and on land where seawater is used for scrubbing of the combustion gas streams.

The present invention can also treat exhaust gas streams from chemical, metallurgical, partial and full combustion processes by the removal of contaminants such as nitrogen oxide, sulfur oxides, hydrochloric acid and particulate materials when co-scrubbing of nitrogen oxides would generate nitrates that are objectionable by-products.

The nitrogen oxides captured are separated from the other contaminants in the gas stream. This produces a smaller quantity of nitrate-containing liquid stream that needs to be processed before it can be discharged or re-used.

The present invention effectively scrubs sulfur oxides, hydrochloric acid and other gases using seawater. The present invention is further a method of oxidizing nitrogen oxides with ozone in the flue gas as described in US 5 206 002. The oxidized nitrogen oxides are captured on condensing surfaces, droplet/mist separators or west electrostatic precipitators (ESPs) as described in US 6 162 409.

The method of the present invention eliminates contamination of nitrate/nitric acid in the particulate scrubber or the wet scrubber for acid gas removal but also removes the need for a separate scrubbing device for nitrogen oxides removal and minimizes purge stream containing nitrate/nitric acid that could be neutralized and disposed of in an environmentally responsible manner.

The small stream of liquid that is collected in the ozone adding device, in particular in the droplet separator or in the droplet separation device, or in the cooler/condenser with nitric acid can be neutralized, processed and disposed of in an environmentally safe manner or sold/used as a by-product.

The separation of other contaminants in the wet scrubber leaves nitrate/nitric acid in a less contaminated form which limits the biological methods that can be used in digesting nitrate/nitric acid to nitrogen.

The use of a single wet scrubber that provides for nitrogen oxides removal without intermingling nitrate/nitric acid with other contaminants is less expensive both in terms of capital and operating expenses than prior processes requiring multiple scrubbers.

The volume of nitrate/nitric acid formed by the inventive process is also minimized and the absence of other contaminants in the aqueous effluent stream makes this stream a useful by-product such as a fertilizer.

Contamination of scrubber purge with nitrate is mitigated so that a large quantity of seawater can be used in a one through scrubbing medium and be safely discharged without additional treatments. A separate scrubber for nitrogen oxides removal is also not necessary thereby minimizing capital investment in retrofitting acid gas (sulfur oxides, hydrochloric acid, etc.) or particulate scrubbing equipment with nitrogen oxides control.

### Brief description of the drawings

For a more complete understanding of the present inventive embodiment disclosures and as already discussed above, there are several options to embody as well as to improve the teaching of the present invention in an advantageous manner. To this aim, reference may be made to the claims dependent on claim 1 and/or on claim 14; further improvements, features and advantages of the present invention are explained below in more detail with reference to preferred embodiments by way of non-limiting example and to the appended drawing figures taken in conjunction with the description of the embodiments, of which:
- Fig. 1: is a schematic of a scrubber incorporating ozone addition to the flue gas stream; and
- Fig. 2: is a schematic of another scrubber showing the addition of seawater and ozone and nitrate/nitric acid purge recovery.

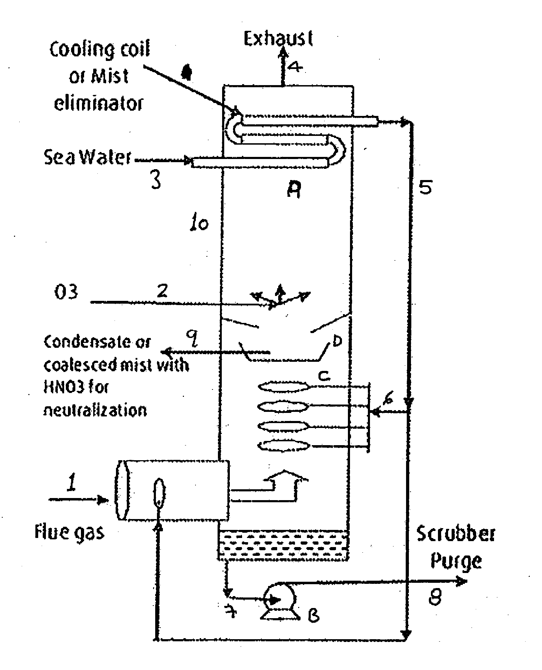

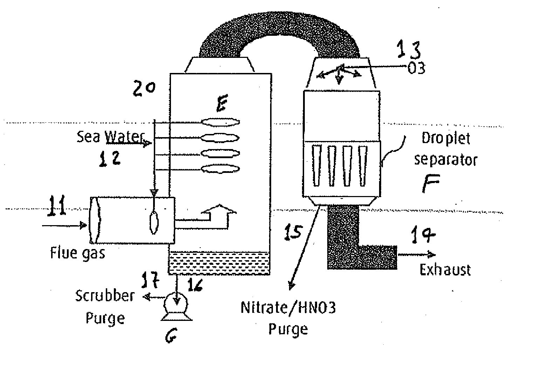

In the appended drawing figures, like equipment is labelled with the same reference numerals throughout the description of Fig. 1 and Fig. 2.

### Detailed description of the drawings; best way of embodying the present invention

By the present invention, contaminants are removed from a gas stream, in particular from exhaust gas, by feeding the gas stream into a scrubber 10, 20 that can use seawater as the scrubbing medium. The gas stream is first scrubbed with the scrubbing medium and then mixed with ozone to remove the contaminants. Nitrogen oxides that are present in the gas stream are converted to nitric acid/nitrates, and these may be recovered via condensate or coalesced mist for neutralization. The treated gas stream is then exhausted to the atmosphere. Before recovering the gas stream free of contaminants or the treated gas stream, nitric acid/nitrate condensate or coalesced mist may be collected from said gas stream.

More particularly, flue gas is quenched and scrubbed by seawater in a wet scrubbing device which could be a standard spray type, venturi type, rod, packed bed, plate column or other commonly used in industrial operations for acid gas an particulate clean up. Wet scrubbers such as EDV scrubber by Belco Technologies or Dynawave by MECS are examples of these. These scrubbers remove particulates, sulfur oxides, hydrochloric acid and other contaminants that are removed by a wet scrubber.

Ozone is then added to the scrubbed gas stream. The oxidation of the nitrogen oxides is accomplished by mixing ozone with the scrubbed gas stream and providing adequate reaction time as described in US 7 303 735 B2 and in US 7 766 995 B2. Proper oxidation of the nitrogen oxides in the presence of moisture will result in the formation of nitric acid which is miscible with water.

The flue gas containing the oxidized nitrogen oxides is then subjected to a droplet separator to lower the carry-over mist or to a controlled cooling on the condensing surface. The droplets in the separator and/or on the condensing surface provide adequate surface area to dissolve, condense, absorb and remove nitrogen oxides.

The droplets are collected to form a small aqueous stream in the droplet separator/condenser and removed and if required neutralized and handled for safe discharge or by product use.

The flue gas stream to be treated contains nitrogen oxides. When ozone is mixed with this stream, the nitrogen oxides are oxidized. If all the nitrogen oxides are in the form of nitric oxide, stoichiometric amounts of ozone required to convert the nitric oxide to dinitrogen pentoxide is 1.5 moles of ozone per mole of nitrogen oxide.

For every mole of NO₂, only 0.5 moles of ozone are required. Accordingly, a range of about 0.5 moles to 1.5 moles of ozone per mole of nitrogen oxides can be added to the flue gas stream to be treated. The nitrogen oxide oxidation to dinitrogen pentoxide involves many reactions but for sake of brevity these reactions can be simplified as follows:

NO + O₃ → NO₂ + O₂ (1)

NO₂ + O₃ → NO₃ + O₂ (2)

NO₂ + NO₃ → N₂O₅ (3)

The reaction (1) is an order of magnitude faster compared to reaction (2). Reactions (1), (2) and (3) are somewhat consecutive reactions. NO₂ has finite solubility so unless the reaction is brought forward to form oxides higher than NO₂ removal of nitrogen oxides in a wet scrubber is limited. In order to form higher oxides without adding excess ozone, it is essential to mix ozone well and provide the necessary reaction time while minimizing back mixing.

In order to achieve good nitrogen oxides removal, a number of principles can be applied. The ozone for example can be introduced in the gas phase by a distributor which uniformly distributes ozone in the entire cross section of the flue gas flow. The flow path can be selected for mixing oxygen where the gas flow is turbulent. The velocity of the ozone containing gas stream's injection into the flue gas can be maintained at least two times and preferably three times or more than the flow velocity of the flue gas stream.

Modern tools such as Computational Fluid Dynamic (CFD) modeling can be employed to ensure through mixing of ozone in the flue gas stream in minimum time.

Conical or diverging nozzles in the distributor can quickly disperse ozone into the cross section of the flowing flue gas stream. Ozone can be mixed with large quantities of a diluent gas and introduced into the distributor for mixing with the gas stream containing the nitrogen oxides. The ozone too may be introduced in a co-current or counter-current direction.

When oxidized, the nitrogen oxides are transformed into their pentavalent form. The gas stream exiting the nitrogen oxides treatment zone is saturated with vapor. The dinitrogen pentoxide will react with the moisture in the gas phase forming nitric acid in the gas phase:

N₂O₅ + H₂O → 2 HNO₃ (g) (4)

HNO₃ (g) being soluble in all proportions with liquid water will instantaneously dissolve in the condensing or coalescing water droplets.

HNO₃ (g) → HNO₃ (I) (5)

Some N₂O₅ since it is extremely soluble will directly dissolve in the condensing or coalescing water droplets.

N₂O₅ + H₂O (I) → 2 HNO₃ (I) (6)

If there is alkali or alkaline earth metal hydroxide, carbonates or bicarbonates present in the coalescing droplets, they will neutralize the nitric acid and form nitrates. If it is condensing water vapor, then it will remain as nitric acid. In the instant invention, nitrogen oxides can be removed using ozone in a gas stream without intermingling nitrates/nitric acid with the rest of contaminants without using dual scrubbers.

Turning to Fig. 1, a scrubber assembly 10 is shown. Flue gas which contains contaminants selected from the group consisting of particulates, sulfur oxides, nitrogen oxides and acid gases is fed through line 1 into scrubber assembly 10. The flue gas containing the contaminants will rise through the scrubber assembly 10 first contacting seawater which is first fed through line 3 into a cooling coil or mist eliminator A.

The seawater will exit the cooling coil or mist eliminator A through line 5 and be fed down to join with the flue gas as it enters the scrubber assembly 10 through line 1. Line 6 will redirect the seawater through a number of distributors C so that the flue gas will contact the seawater and be quenched by this contact.

The moist flue gas will continue to rise through the scrubber assembly 10 and will contact ozone that is fed through line 2 into the scrubber assembly 10. The ozone will have sufficient space based on the size of the scrubber assembly 10 to react with the nitrogen oxides and sulfur oxides present in the flue gas stream.

Part of the reaction product will be nitric acid which will condense or coalesce on a tray device D and will be removed from the scrubber assembly 10 through line 9 for neutralization and either reused as may be allowed or disposed in an environmentally friendly manner.

The treated flue gas stream will continue to rise through the scrubber assembly 10 and will exit as exhaust through line 4. The seawater which is used as the scrubbing medium in the scrubber assembly 10 can be used as a once through or recycled depending upon the operator's preferences. The used scrubbing agent is captured at the bottom of the scrubbing assembly 10 and can be withdrawn through line 7 with the aid of a pump B and purged from the scrubber assembly 10 through line 8.

In a different embodiment of the present invention, the ozone adding device is a separate device from the scrubbing assembly. In Fig. 2, scrubbing assembly 20 is attached to a droplet separator F. In the top of the droplet separator F ozone is injected through line 13. Flue gas is fed through line 11 and will rise through the scrubber assembly 20 where it will contact the seawater fed through line 12 to a distribution assembly E. The moist scrubbed flue gas will exit scrubber assembly 20 and enter droplet separator F.

At the top of the droplet separator F the flue gas will contact the ozone where the nitrogen oxides and sulfur oxides present in the flue gas stream will oxidize and their reaction products of nitrates and nitric acid will be collected and purged through line 15. This stream can be treated and neutralized and either used or disposed of in an environmentally friendly manner. The treated flue gas stream will exit the droplet separator F through line 14 and be evacuated to the atmosphere.

The seawater that is employed as the scrubbing medium can be used in a once through manner or be recycled and used for several cycles of treating the flue gas. The used seawater will leave the bottom of the scrubber assembly 20 through line 16 and is assisted in its removal through line 17 by pump G.

Alternatively, a wet electro static precipitator (ESP) can be employed instead of a cooling coil or mist elimination device at the top of the scrubbing assembly shown in Fig. 1 and in Fig. 2. The wet ESP condenses the nitric acid/nitrate over plates.

Sulfur oxides and acid gas scrubbing are accomplished by quenching or wetting zones of the wet ESP and a small section downstream between the wetting zone and the charged plates is an oxidizer for nitrogen oxides. The seawater used in the wetting zone removes sulfur oxides, hydrochloric acid and other contaminants whereas the charged plates mainly capture the particulates, droplets and nitrogen oxides.

In other embodiments, the present invention can employ using an aqueous medium instead of seawater in the wet scrubber with once through or recirculation of aqueous medium through spray nozzles, or flowing through packed, bubble or plate column. The flow of liquid and gas can be counter current or co-current. Spray may be projected to the walls of the scrubbers as is done in the EDV scrubbers.

Mercury or other heavy metals when present in the flue gas are oxidized along with the nitrogen oxides and can also be removed on the condensing/coalescing surfaces along with the nitric acid/nitrate.

Using dry adsorbents in a fluidized form or in a fixed bed can be used downstream of the wet scrubber to adsorb moisture and oxidized nitrogen oxides/nitric acid.

While the present invention has been described with respect to particular embodiments thereof, it is apparent that numerous other forms and modifications of the present invention will be obvious to those skilled in the art. The appended claims in the present invention generally should be construed to cover all such obvious forms and modifications which are within the true spirit and scope of the present invention.

### List of reference numerals

- 1: line
- 2: line
- 3: line
- 4: line
- 5: line
- 6: line
- 7: line
- 8: line
- 9: line
- 10: scrubber or scrubber assembly or scrubbing assembly
- A: cooling coil or mist eliminator or mist elimination device
- B: pump
- 11: line
- 12: line
- 13: line
- 14: line
- 15: line
- 16: line
- 17: line
- 20: scrubber or scrubber assembly or scrubbing assembly
- C: distributor or distributor assembly or distribution assembly, in particular spray nozzle
- D: tray device
- E: distributor or distributor assembly or distribution assembly, in particular spray nozzle
- F: ozone adding device, in particular droplet separator or droplet separation device
- G: pump

## Claims

1. A method for removing contaminants from a gas stream comprising the steps of:
- feeding said gas stream containing said contaminants into a scrubber (10; 20);
- contacting said gas stream containing said contaminants with at least one scrubbing medium, in particular with at least one scrubbing agent;
- contacting said gas stream containing said contaminants with ozone; and
- recovering a gas stream free of said contaminants.

2. The method according to claim 1, wherein said scrubbing medium comprises at least one aqueous medium and/or seawater.

3. The method according to claim 1 or 2, wherein said scrubbing medium is fed
- into at least one cooling coil or mist eliminator or mist elimination device (A) or
- into at least one wet electro static precipitator
and is joined with said gas stream as said gas stream enters said scrubber (10; 20).

4. The method according to at least one of claims 1 to 3, wherein said scrubbing medium is directed, in particular redirected, through at least one distributor (C; E), in particular through at least one spray nozzle, so that said gas stream contacts said scrubbing medium and is quenched by this contact.

5. The method according to at least one of claims 1 to 4, wherein said scrubbing medium is used in a once through manner or is recycled.

6. The method according to at least one of claims 1 to 5, wherein said used scrubbing medium is captured at the bottom of said scrubber (10; 20) and is withdrawn by means of at least one pump (B; G) and/or purged from said scrubber (10; 20).

7. The method according to at least one of claims 1 to 6, wherein said gas stream rises through said scrubber (10; 20).

8. The method according to at least one of claims 1 to 7, wherein said ozone has sufficient space based on the size of said scrubber (10; 20) to react with, in particular to make oxidize, nitrogen oxides and/or sulfur oxides present in said gas stream.

9. The method according to at least one of claims 1 to 8, wherein said scrubber (20) is attached to at least one ozone adding device (F), in particular to at least one droplet separator or to at least one droplet separation device.

10. The method according to claim 9, wherein said ozone is injected at the top of said scrubber (10; 20), in particular at the top of said ozone adding device (F).

11. The method according to at least one of claims 1 to 10, wherein moisture and/or oxidized nitrogen oxides/nitric acid are/is adsorbed by means of at least one dry adsorbent.

12. The method according to claim 11, wherein said dry adsorbent is in a fluidized form or in at least one fixed bed.

13. The method according to at least one of claims 1 to 12, further comprising the additional step of collecting nitric acid/nitrate condensate or coalesced mist from said gas stream before the step of recovering said gas stream free of said contaminants.

14. A scrubber (10; 20) being operated according to the method according to at least one of claims 1 to 13.

15. The scrubber (20) according to claim 14, being attached to at least one ozone adding device (F), in particular to at least one droplet separator or to at least one droplet separation device.
